## Europäisches Patentamt

## European Patent Office

## Office européen des brevets

(19)

(11) Veröffentlichungsnummer: **0 211 225**
**B1**

(12) **EUROPÄISCHE PATENTSCHRIFT**

(45) Veröffentlichungstag der Patentschrift: **10.10.90**

(21) Anmeldenummer: **86108853.2**

(22) Anmeldetag: **28.06.86**

(51) Int. Cl.⁵: **A 21 C 15/02, A 21 B 5/02**

(54) Verfahren zur Herstellung von insbesondere gewickelten Waffeltüten.

(30) Priorität: **05.07.85 DE 3524116**
**19.04.86 DE 3613292**

(43) Veröffentlichungstag der Anmeldung:
**25.02.87 Patentblatt 87/09**

(45) Bekanntmachung des Hinweises auf die
Patenterteilung:
**10.10.90 Patentblatt 90/41**

(84) Benannte Vertragsstaaten:
**AT BE CH DE FR GB IT LI LU NL SE**

(56) Entgegenhaltungen:
**DE-A-3 304 383**
**DE-A-3 311 035**
**US-A-2 069 026**
**US-A-4 223 204**
**US-A-4 578 273**

(73) Patentinhaber: **Firma Karl Oexmann Inh.**
**Wolfgang Oexmann**
**Auf'm Wasserkamp 5**
**D-4650 Gelsenkirchen-Hessler (DE)**

(72) Erfinder: **Herting, Heinrich**
**Grenzweg 24**
**D-4690 Herne 1 (DE)**

(74) Vertreter: **Ostriga, Harald, Dipl.-Ing. et al**
**Patentanwälte Dipl.-Ing. Harald Ostriga Dipl.-**
**Ing. Bernd Sonnet Stresemannstrasse 6-8**
**D-5600 Wuppertal 2 (DE)**

Courier Press, Leamington Spa, England.

EP 0 211 225 B1

## Beschreibung

Die Erfindung betrifft ein Verfahren, wie es entsprechend dem Oberbegriff des Patentanspruchs 1 durch die US—A—20 69 026 bekanntgeworden ist.

Derartiges Backwert besteht aus gebackenem Teig. Backwerk in Form von Waffeltüten wird fast ausnahmslos in überwiegender Weise für die Füllung mit Speiseeiskrem verwendet. Die Waffeltüten werden von Backmaschinen hergestellt, die entweder die Tüten in kokillenartigen Backformen backen oder mehr oder weniger runde, dünne Waffelblätter zwischen Backplatten von Waffelzangen backen. Diese Waffelblätter werden unmittelbar nach dem Backen ggf. über eine maschineneigene Fördereinrichtung einer maschineneigenen Tütenwickeleinrichtung zugeführt.

Der Verkauf solcher mit Speiseeis gefüllten Tüten hat die Wirkung, daß dem Kunden ein Erzeugnis, nämlich Speiseeis in einer Verpackung dargereicht wird, die selbst dem Verzehr dient, so daß bei dieser Art Verpackung kein Abfall eintsteht. Der Mangel bei dieser an sich vorteilhaften Verpackung oder auch anderen Backwerks besteht indes darin, daß diese selbst nur nach einem großen maschinellen Aufwand als Werbeträger benutzt werden kann. Und zwar trägt das Backwer (Waffeltüte) gemäß der US—PS 20 69 026 einen durch die Gravur der Backplatte auf der Waffeloberfläche erzeugten Schriftzug. Das bedeutet, daß diese Art Werbung praktisch unverändert beibehalten werden muß, da jede Änderung der Backformprägung eine neue Gravur bzw. Gravurteile (s. z.B. DE—A—33 11 035) für alle Backformen einer Backformkette erfordern würde. Hinzu kommt, daß leistungsfähige Waffelfabriken über eine Vielzahl von Backmaschinen verfügen, so daß eine Gravuränderung aus diesem weiteren Grunde praktisch nicht durchführbar wäre.

Ausgehend vom Backverfahren gemäß der US—A—20 69 026, liegt der Erfindung die Aufgabe zugrunde, das bekannte Verfahren so auszugestalten, daß Backwerk, insbesondere Waffelblätter, mit einem wesentlich geringeren technischen Aufwand als bisher zum Träger einer individuellen und wechselnden Wünschen angepaßten Werbung sein können. Diese Aufgabe wird entsprechend dem Kennzeichenteil des Patentanspruchs 1 gelöst.

Gemäß diesem Erfindungsgedanken soll nunmehr das Backwert bedruckt werden. Damit wird der Weg frei für das Aufbringen von Kennzeichen, Schriften, Abbildungen, Zeichnungen und dergleichen, die der Förderung des Verkaufs dienen.

Gemäß diesem Erfindungsgedanken soll nunmehr die Waffeltüte bedruckt werden. Damit wird der Weg frei für das Aufbringen von Kennzeichen, Schriften, Abbildungen, Zeichnungen und dergleichen, die der Förderung des Verkaufs dienen.

Erfindungsgemäß soll das Bedrucken des Backwerks den schnellen, maschinellen Ablauf der Fertigung, z.B. der Tüten, nicht verzögern und möglichst kostengünstig erfolgen.

Der Druckvorgang soll unbedingt in dem Herstellungablauf des Blockwerks, insbesondere der Waffeltüten, enthalten sein und mit diesem gleichlaufen, um eine Zwischenlagerung der Backware zum Zwecke des Bedruckens zu vermeiden. Die Erfindung vermeidet hiermit auch die Verschlechterung der Ware oder mangelnde Sauberkeit durch Vermehrung der Handhabungen.

Als besonders wichtig erkennt die Erfindung die Maßnahme, das das Gebäck unmittelbar nach dem Backen im warmen Zustand bedruckt wird. Das hat die Wirkung, daß die von einem Druckstempel auf das Backwert aufgebrachte, besonders begierig aufgenommene Farbe danach sehr schnell trocknet, so daß jede weitere Behandlung des Backwerkes wie vordem sofort erfolgen kann, ohne daß die Gefahr besteht, daß der Druck verwischt.

Sofern eine Tüte aus dünnen, gebackenen Waffelblättern gewickelt wird, schlägt die Erfindung vor, das warme, feste, aber noch nicht harte—d.h. noch wickelweiche bzw. wickelfähige—Waffelblatt entweder in dem Augenblick zu bedrucken, in dem es unmittelbar nach dem Backvorgang bei zur Entnahme geöffneter Backform gerade noch plan in der unteren Backplatte liegt oder auf dem Wege von der Backform zur Tütenwickeleinrichtung beim Durchlaufen der Fördereinrichtung zu bedrucken. Hierbei sei erwähnt, daß bei einschlägigen Backmaschinen Fördereinrichtungen anzutreffen sind, bei denen ein bereits stempelartig ausgebildetes Teil so lange auf das aus der unteren Backform gehobene Waffelblatt drückt, bis es dieses auf einer glatten Metallbahn von der Backplatte zur Tütenwickeleinrichtung geschoben hat.

Erfindungsgemäß soll diesem stempelartig ausgebildeten Teil die zusätzliche Aufgabe des Druckens zugewiesen werden oder es soll ein unabhängiger, besonderer Druckstempel allein oder zusätzlich drucken. Dieser besondere Druckstempel braucht dann nur kurzzeitig auf das Backwerk zu drücken, um das Backwerk mit der an dem Druckstempel haftenden Farbe zu benetzen, wobei das warme Backwerk die Farbe begierig aufsaugt und die Farbe schnell trocknet. Er kann ansonsten hart sein, weil insbesondere das für die Waffelblätter eingesetzte Teiggemisch kurz nach dem Bakken ein im/ warmen Zustand noch nachgiebig biegsames Blatt ergibt, das erst nach dem Erkalten völlig steif ist.

Damit die für den Druck benötigte Farbe auf den Druckstempeln nicht austrocknet, wird erfindungsgemäß eine Kühlung sowohl für die Druckstempel als auch ggf. für die Einfärbeeinrichtungen der Druckstempel vorgeschlagen. Als Farbe bieten sich Lebensmittelfarben an, darüber hinaus apothekensaubere Kohle (Magenkohle) als für diesen Zweck sehr wirksamer, schwarzer Farbstoff.

Weitere Vorteile, Einzelheiten und erfindungswesentliche Merkmale ergeben sich aus der nachfolgenden Beschreibung bevorzugter Ausführungsbeispiele entsprechend der Erfindung unter Bezugnahme auf die beigefügten Zeichnungen. Diese Zeichnungen zeigen in:

Fig. 1 eine Draufsicht auf die Entnahmeseite einer Waffelbackmaschine mit Druckstation und Tüten-Waffelblatt-Wickeleinrichtung;

Fig. 2 eine Schnittansicht etwa entsprechend der Schnittlinie II—II in Fig. 1;

Fig. 3 eine bezüglich Fig. 2 alternative Ausführungsform, jedoch nur teilweise und vergrößert dargestellt und

Fig. 4 die schematische Darstellung einer Steuerkulisse.

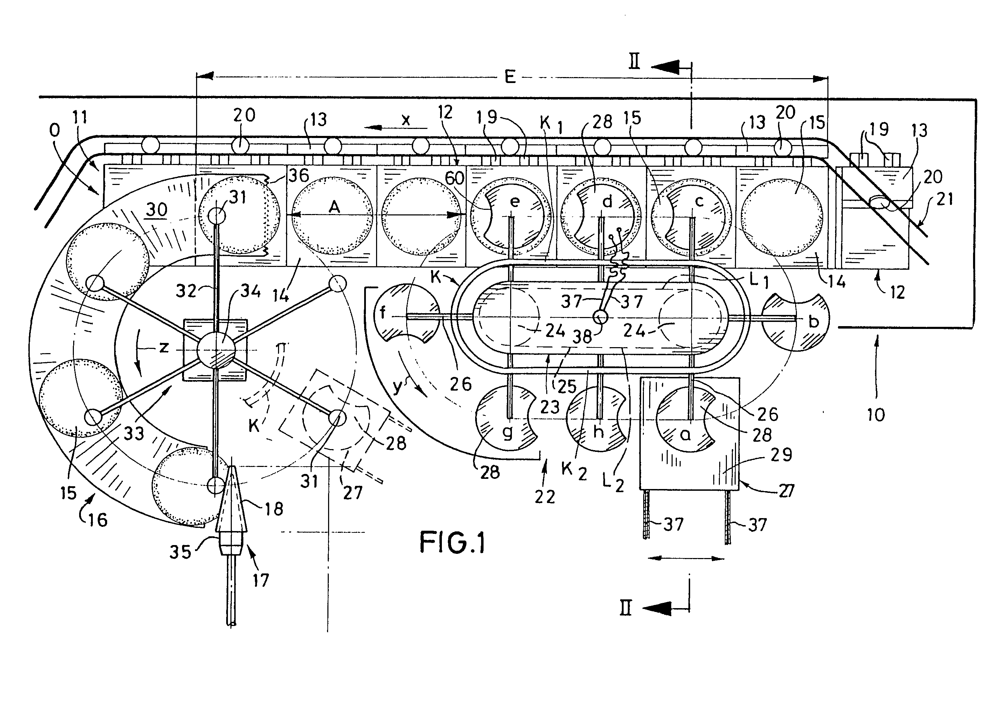

In Fig. 1 ist eine schematisch gezeigte Waffelbackmaschine insgesamt mit 10 bezeichnet. Die Waffelbackmaschine 10 weist eine Backkette 11 auf, von welcher nur das Obertrum 0 zu sehen ist. Die umlaufend geführte Backkette 11 besitzt Backzangen bzw. Backformen 12, welche jeweils eine Oberform 13 und eine Unterform 14 aufweisen. Auf den Gravurflächen der Unterformen 14 liegen Waffelblätter 15 auf, welche über eine Entnahmevorrichtung 16 aufgenommen und mittels einer Tüten-Waffelblatt-Wickeleinrichtung 17 zu konischen Waffeltüten gewickelt bzw. gerollt werden sollen. Derartige mit 18 bezeichnete Waffeltüten werden mit Speiseeis befüllt.

Ober- und Unterform 13, 14 sind über Scharniere 19 miteinander verbunden, so daß die Oberform 13 von der Unterform 14 abgeklappt werden kann, wenn die Backform 12 mit flüssigem Teig gefüllt oder — wie in Fig. 1 dargestellt — aus der offenen Backform 12 das fertige Waffelblatt 15 entnommen werden soll.

Um ein Auf- und Zuklappen der Backformen 12 zu bewerkstelligen, ist jede Oberform 13 mit einem Kulissenstein 20 versehen, welcher in einer Kulisse 21 gleitet, deren räumlicher Verlauf die rechts in Fig. 1 dargestellte geschlossene Backform 12 öffnen kann, wie in Fig. 1 anhand der übrigen Backformen 12 dargestellt ist.

Aus Fig. 1 ist weiterhin eine Druckstation 22 zu ersehen. Die Druckstation 22 ist benachbart den mit E bezeichneten Entnahmebereich der Waffelmaschine 10 angeordnet.

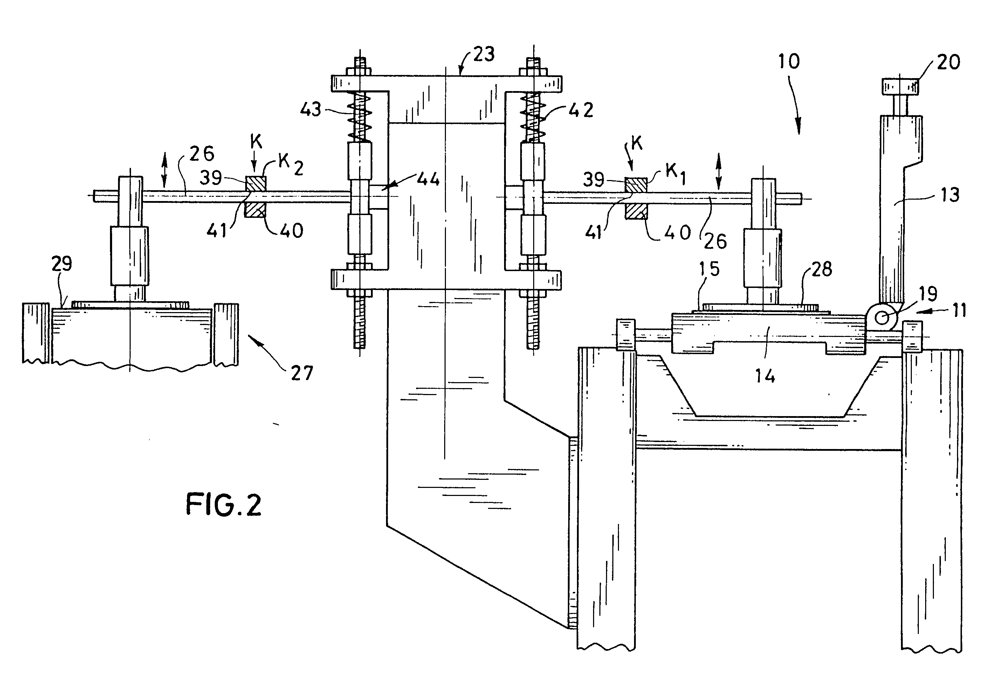

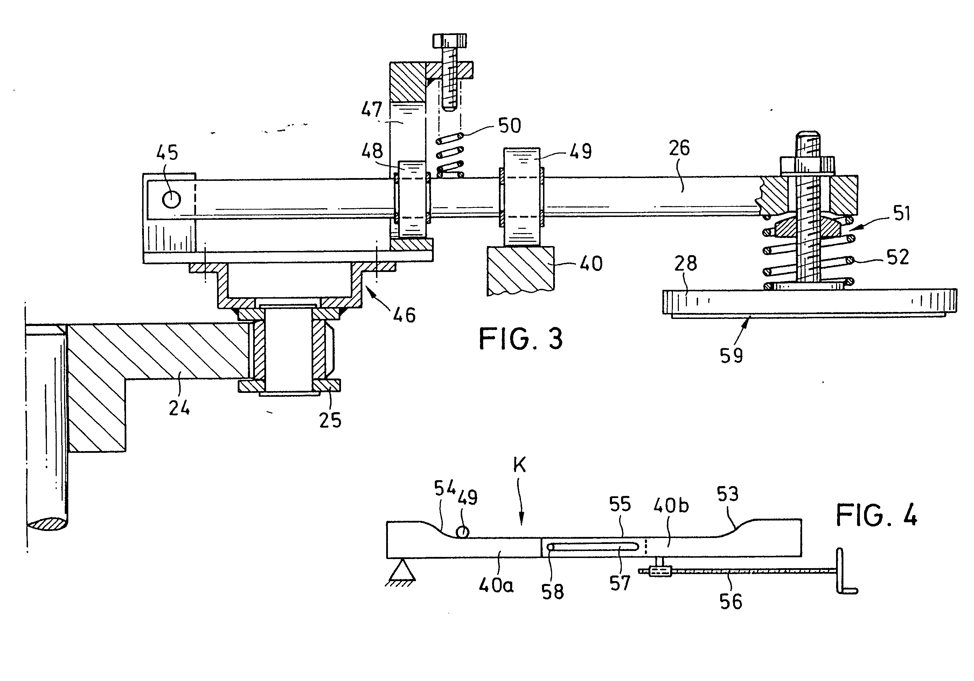

Die Druckstation 22 besitzt ein Antriebsteil 23, welches eine in Fig. 1 nur gestrichelt dargestellte, über Kettenräder 24 angetriebene und umlaufend geführte Antriebskette 25 aufweist, an welcher Haltearme 26 höhenbeweglich, z.B. parallelhöhenbeweglich (Fig. 2) oder schwenkbar höhenbeweglich (Fig. 3) angelenkt sind.

Die Bewegungsbahn der Antriebskette 25 läuft in einer horizontalen, den ebenen bzw. planen Waffelblättern 15 paralellen Ebene.

Die Antriebskette 25 bildet en Oval mit einer Längsseite $L_1$ und mit einer anderen Längsseite $L_2$. Die eine Längsseite $L_1$ bildet eine erste Bewegungsbahn benachbart den formseitig aufgenommenen offenliegenden Waffelblättern 15, während die Längsseite $L_2$ eine zweite Bewegungsbahn bildet. Diese zweite Bewegungsbahn $L_2$ ist benachbart einem Farbauftragsmittel, und zwar einem Stempelkissen 27, angeordnet. Steuermittel, und zwar eine Steuerkulisse K mit Kulissenbereichen $K_1$ und $K_2$, sorgen däfur, daß plattenartige Druckstempel 28 mit ihren dem Betrachter gemäß Fig. 1 abgewandten Unterseiten (Stempel-Gravurflächen 59) auf die noch heißen Waffelblätter 15 aufgesetzt werden, sodann von den Waffelblättern 15 abgehoben, schließlich auf die Stempelkissenfläche 29 aufgesetzt und wiederum von der Stempelkissenfläche 29 abgehoben werden. Die Förderrichtung der Backkette 11 ist mit x und die Umlaufrichtung der Haltearme 26 und Druckstempel 28 tragenden und umlaufend führenden Antriebskette 25 ist mit y bezeichnet.

Die Funktion der Druckstation 22 verläuft wie folgt

Bei der Position a kontaktiert der Druckstempel 28 die Stempelkissenfläche 29. Der bereits mit einem Farbauftrag versehene Druckstempel 28 in der Position b ist nach Verlassen des Kulissenbereichs $K_2$ durch die insgesamt mit K bezeichnete Kulisse in eine angehobene Position übergeführt worden. Der ebenfalls mit einem Farbauftrag versehene Druckstempel 28 setzt in der Position c soeben auf das heiße Waffelblatt 15 auf, während sich der Druckstempel 28 in seiner Position d in vollem Druckkontakt mit dem Waffelblatt 15 befindet. Der Druckstempel in der Position e hebt hingegen soeben von dem Waffelblatt 15 ab, während der Druckstempel 28 in der Position f gegenüber der Position e ebenso wie gemäß der Position g angehoben ist. Von der Position h bis zur Position a verläuft der Absenkvorgang des Druckstempels 28 bis zum festen Kontakt mit der Stempelkissenfläche 29.

Die mit einem beispielsweise figurativen Druckauftrag versehenen heißen Waffelblätter 15 gelangen mit der Backkette 11 schließlich an die Entnahmestation 16, und zwar an ein rampenförmig ansteigendes ebenes Transportblech 30 teilkreisartiger Grundform. An der Anlaufseite ist das Rampenblech 30 bei 36 schaberartig ausgebildet, so daß es einen Schabekontakt mit der Gravurfläche der Unterform 14 erlaubt. Hierdurch können die Waffelblätter 15 auf das Rampenblech 30 auflaufen, wo sie von Mitnehmerstempeln 31 drückend kontaktiert werden. Die Mitnehmerstempel 31 setzen hierbei jeweils auf einem farbfreien Bereich der bedruckten Waffel 15 auf, der durch die bogenförmige begrenzte Ausnehmung 60 des Druckstempels 28 gebildet ist.

Die Mitnehmerstempel 31 sind endseitig von radial ahgeordneten Spinnenarmen 32 einer insgesamt mit 33 bezeichneten Förderspinne angeordnet, deren Drehachse 34 zentral zum Rampenblech 30 teilkreisförmiger Grundform angeordnet ist. Die Drehrichtung der Förderspinne 33 ist mit z angegeben. Auf diese Weise ist vorstellbar, daß die sich kreisförmig bewegenden Mitnehmerstempel 31 die Waffelblätter 15 auf dem Rampenblech 30 bis zum Wickeldorn 35 der Wickeleinrichtung 17 führen, wo die Verarbeitung zu konischen Waffeltüten 18 erfolgt.

In Fig. 1 ist eine alternative Ausführungsform in Strichlinien angedeutet, gemäß welcher jeder Mitnehmerstempel 31 zugleich einen Druckstempel 28 bildet. Dieser Anordnung zugeordnet ist ein Stempelkissen 27 und eine ebenfalls mit K bezeichnete Kulisse, welche die höhenschwenkbeweglich angelenkten Spinnenarme 32 steuert.

3

Bei dieser alternativen Ausführungsform würde das Bedrucken der Waffelblätter 15 unmittelbar hinter dem schaberförmigen Bereich 36 auf dem Rampenblech 30 erfolgen. Bei dieser alternativen Ausführungsform muß insbesondere durch Wahl der Konsistenz der verwendeten Lebensmittelfarbe dafür gesorgt werden, daß der Druckauftrag des Waffelblatts 15 bis zum Erreichen der Wickeleinrichtung 17 wischfest angetrocknet ist.

Um bei der konkret in Fig. 1 dargestellten Ausführungsform mit der Druckstation 22 ein wischfestes Antrocknen des Druckauftrages zu gewährleisten, ist die Backkette 11 um eine Zusatzlänge A, die zusätzliche Trockenzeit des Farbauftrags gerantiert, erweitert.

Um ein Antrocknen der Druckfarbe an den Stempel-Gravurflächen 59 der Stempel 28 zu vermeiden, ist jeder Stempel 28 mit durchströmbaren Kühlungshohlräumen versehen, die über Kühlwasserschläuche (Zu- und Ablauf) 37 beschickt werden. Die Kühlwasserschläuche 37 sind in Fig. 1 lediglich repräsentativ für einen einzigen Druckstempel 28 eingezeichnet. Die Versorgung der Kühlwasserschläuche 37 erfolgt über einen mit der Geschwindigkeit der Antriebskette 25 in derselben Drehrichtung umlaufenden drehschieberartig aufgebauten zentralen Verteiler 38.

Auch der Tragkörper des Stempelkissens 27 weist Kühlungshohlräume auf, welche ebenfalls über Kühlwasserschläuche 37 beaufschlagt werden. Wie unterhalb des Stempelkissens 27 mit einem Doppelpfeil angedeutet, wird das Stempelkissen 27 hin- und hergehend (beispielsweise über eine Viereckbewegung) angetrieben, so daß es während der Beaufschlagung des jeweiligen Druckstempels 28 mit Farbe dessen Bewegung in Richtung y folgen kann.

Fig. 2 zeigt, wei beispielsweise die Haltearme 26 durch die Kulissenführungen im Bereich $K_1$ und $K_2$ höhenverstellt werden können. Hierzu weist die Kulisse K eine obere Kulissenschiene 39 und eine untere Kulissenschiene 40 auf, welche zwischen sich den Kulissenspalt 41 bilden. Die über Dämpfungsfedern 42 abgefederte Parallelführung der Haltearme 26 auf Führungsstangen 43 ist insgesamt mit der Bezugsziffer 44 versehen.

Im Unterschied zu Fig. 2 ist gemäß Fig. 3, bei welcher das Stempelkissen 27 und die Waffelbackmaschine 10 weggelassen sind, der Haltearm 26 nach Art eines Kipphebels bei 45 schwenkbar gelagert. Aus Fig. 2 sind auch ein Antriebskettenrad 24 sowie die Antriebskette 25 zu ersehen, welche eine Haltekonsole 46 mit dem Schwenklager 45 und einer mit einem Langloch 47 versehenen Parallelführung für einen Führungsstein 48 des schwenkbaren Haltearms 26 trägt. Die Anordnung gemäß Fig. 2 benötigt lediglich eine untere Kulissenschiene 40, auf der eine Führungsrolle 49 läuft. Der Haltearm 26 wird über eine einstellbare Druckfeder 50 ständig federnd nach unten gedrückt. Zur Vermeidung einer einseitigen Anlage des Druckstempels 28 sowohl auf der Stempelkissenfläche 29 als auch auf den Waffelblättern 15 ist der Druckstempel 28 über ein Raumgelenk 51 unter Zwischenschaltung einer Druckfeder 52 am freien Ende des Haltearms 26 raumbeweglich gehalten.

Fig. 4 zeigt im Zusammenhang mit Fig. 3, wie eine Kulissenführung verändert werden kann. Die Kulisse K gemäß Fig. 4 weist zwischen einer abfallenden Kurve 53 und einer ansteigenden Kurve 54 eine Geradführung 55 auf. Im Bereich der Geradführung 55 ist die Kulissenschiene in zwei Bereiche, d.h. in eine Kulissenschiene 40a und in eine weitere Kulissenschiene 40b aufgeteilt. Das Teil 40a ist raumfest gehalten, während das Teil 40b relativ zu 40a über eine Spindelstelltrieb 56 verstellbar ist, was über eine Langlochanordnung 57 mit Zapfen 58 geschieht. Auf diese Weise kann die Länge der Geradführung 55, und damit die Kontaktzeit zwischen Druckstempel 28 und Waffelblatt 15 einerseits bzw. Stempelkissen 27 andererseits, variiert werden. Es ist auch eine Ausführungsform denkbar, bei welcher beide Teilkulissen 40a, 40b jeweils über einen Stelltrieb 56 verschieblich sind. Auf diese Weise könnten sodann beide Kurven 53 und 54 verschoben werden.

## Patentansprüche

1. Verfahren zur Herstellung von Backwerk in einer Maschine mit kontinuierlich ablaufendem Fertigungsgang, insbesondere von gewickelten Waffeltüten, dadurch gekennzeichnet, daß das Backwert unmittelbar nach dem Backen im warmen Zustand mit Farbe bedruckt wird und daß der Druckvorgang im Fertigungsablauf der das Backwerk herstellenden Maschine enthalten ist.

2. Verfahren nach Anspruch 1, dadurch gekennzeichnet, daß das Backwerk in Gestalt des Waffelblattes, aus dem eine Waffeltüte gewickelt wird, bedruckt wird, solange es plan in der gefüllten Backform offenliegt.

3. Verfahren nach Anspruch 1, dadurch gekennzeichnet, daß das Backwerk in Gestalt des Waffelblattes, aus dem die Waffeltüte gewicklet wird, auf dem Weg des Waffelblattes von der Backplatte bzw. -form zur Tütenwickeleinrichtung auf der Fördereinrichtung bedruckt wird.

4. Verfharen nach Anspruch 3, dadurch gekennzeichnet, daß ein stempelartiges Förderteil das Waffelblatt von der Backform über eine Fördereinrichtung zur Wickeleinrichtung bewegt und hierbei sowohl auf das zu befördernde Waffelblatt aufsetzt als auch von ihm abhebt und auch als Druckstempel arbeitet.

5. Verfahren nach einem der Ansprüche 2 bis 4, dadurch gekennzeichnet, daß das Backwerk mittels eines zusätzlichen oder besonderen Druckstempels bedruckt wird und daß der Druckstempel unabhängig von der Fördereinrichtung gesteuert wird.

6. Verfahren nach einem der Ansprüche 1 bis 5, dadurch gekennzeichnet, daß der Druckstempel durch Farbkissen oder Farbwalzen eingefärbt wird.

7. Verfahren nach einem der Ansprüche 1 bis 6, dadurch gekennzeichnet, daß Druckstempel, Stempelkissen oder Walzen gekühlt werden, insbesondere durch Kühlflüssigkeit, die durch das Innere der Stempel sowie durch Stempelkissen und/oder durch Farbwalzen fließt.

8. Verfahren nach einem der Ansprüche 1 bis 7, dadurch gekennzeichnet, daß mehrere Druckstempel einerseits nacheinander stempeln, andererseits unterschiedliche Druckmuster aufweisen.

9. Verfahren nach Anspruch 8, dadurch gekennzeichnet, daß die Druckstempel mittels einer einzigen Einfärbeeinrichtung eingefärbt werden.

10. Verfahren nach einem der Ansprüche 1 bis 9, dadurch gekennzeichnet, daß das plane warme und wickelweiche Backwerk bzw. Waffelblatt nach dem Stempeln aber vor dem Wickeln so lange Zeit in der offenen Backform bzw. auf der Fördereinrichtung mitgeführt wird, bis die Stempelfarbe angetrocknet ist.

11. Vorrichtung zum Herstellen von Waffeltüten mit Waffelblatt-Wickeleinrichtung und Unter- und Oberformen, die eine Backkette bilden, zur Durchführung des Verfahrens nach einem der Ansprüche 1 bis 10, dadurch gekennzeichnet, daß stromaufwärts vor einer Waffelblatt-Wickeleinrichtung (17) benachbart dem bereich (E) in welchem die im wesentlichen jeweils aus Unter- und Oberform (14, 13) bestehenden Backzangen bzw. Backformen (12) zur Entnahme der Waffelblätter offen sind mindestens ein Druckstempel (28) an einem umlaufend arbeitenden Antriebsmittel (25) gehalten ist, welches eine erste Bewegungsbahn ($L_1$) benachbart den in der Form offenliegenden Waffelblättern (15) und welches eine zweite Bewegungsbahn ($L_2$) benachbart einem Farbauftragsmittel (27), wie Stempelkissen, Farbwalze od. dgl., aufweist und wobei jeder Bewegungsbahn ($L_1$, $L_2$) Steuermittel (K; $K_1$, $K_2$) zugeordnet sind, welche die Stempel-Gravurfläche mit dem Waffelblatt (15) oder mit dem Farbauftragsmittel (27) kontaktieren und von diesem abheben.

12. Vorrichtung nach Anspruch 11, dadurch gekennzeichnet, daß sich die Bewegungsebene des umlaufend geführten Antriebsmittels (25) und der jeweiligen Stempel-Gravurfläche des oder der Druckstempel (28) im wesentlichen parallel zur dem das offene Waffelblatt (15) enthaltenden Formteil, insbesondere Unterform (14), und ggf. parallel zu einer Anlagekante (z.B. Farbauftragswalze) oder Anlagefläche (29) (z.B. Stempelkissen (27)) eines Farbauftragsmittel erstreckt.

13. Vorrichtung nach Anspruch 11 oder nach Anspruch 12, dadurch gekennzeichnet, daß das umlaufend geführte Antriebsmittel von einer in einer horizontalen Ebene parallel zu den Gravurflächen der Unterformen (14) und parallel zur Anlagekante bzw. -fläche (29) des Farbauftragsmittels (27) umlaufenden Antriebskette (25) gebildet ist.

14. Vorrichtung nach einem der Ansprüche 11 bis 13, dadurch gekennzeichnet, daß die Druckstempel (28) etwa plattenartige Bauteile bilden, welche über schwenkbar (Fig. 3) oder translatorisch (Fig. 2) zu den Backform-Gravurflächen (bei 14) und dem Farbauftragsmittel (27) bewegliche Haltearme (26) mittels der Steuermittel (K; $K_1$, $K_2$) verstellbar sind.

15. Vorrichtung nach einem der Ansprüche 1 bis 14, dadurch gekennzeichnet, daß die Steuermittel von die Druckstempel (28) bzw. deren Haltearme (26) führenden Kulissen (K; $K_1$, $K_2$) gebildet sind.

16. Vorrichtung nach einem der Ansprüche 11 bis 15, dadurch gekennzeichnet, daß das umlaufend geführte Antriebsmittel (25) ein Oval mit geraden Längsseiten ($L_1$, $L_2$) beschreibt, wobei jeweils eine Längsseite der ersten ($L_1$) und der zweiten ($L_2$) Begungsbahn zugeordnet ist.

17. Vorrichtung nach einem der Ansprüche 11 bis 15, dadurch gekennzeichnet, daß das umlaufend geführte Antriebsmittel (33) eine Kreisbahn beschreibt.

18. Vorrichtung nach einem der Ansprüche 11 bis 17, dadurch gekennzeichnet, daß Druckstempel (28) und/oder Farbauftragsmittel, insbesondere Stempelkissen (27), von einem Kühlmedium, wie zum Beispiel von Kühlwasser, durchströmbare Kühlungshohlräume (37) aufweisen.

19. Vorrichtung nach einem der vorangehenden Ansprüche, insbesondere nach Anspruch 17, gekennzeichnet durch eine von der formseitigen Entnahmestelle (bei 36) für die Waffelblätter (15) bis zur Wickeleinrichtung (17) rampenförmig ansteigende ebene Transportfläche (30) teilkreisartiger Grundform und durch eine zentral zur teilkreisartigen Rampenflächen (30) angeordnete drehkreuzartige Förderspinne (33) mit dem Verlauf der Rampenfläche (30) folgenden, endseitig mit Mitnehmerstempeln (31) versehenen Spinnenarmen (32), was bekannt ist, wobei die Mitnehmerstempel (31) zugleich als Druckstempel (38) ausgebildet sind.

20. Vorrichtung nach einem der vorangehenden Ansprüche, dadurch gekennzeichnet, daß zur Steuerung der Druckstempel-Haltearme (26) vorgesehene Kulissen (K; $K_1$, $K_2$) jeweils zwischen einer abfallenden (53) und einer ansteigenden Kurve (54) eine gerade Kulissen-Führungsfläche (Geradführung) (55) bilden, welche jeweils die Kontaktierung des Druckstempels (28) mit dem Waffelblatt (15) beziehungsweise mit dem Farbauftragsmittel (27) bewirkt.

21. Vorrichtung nach Anspruch 20, dadurch gekennzeichnet, daß die jeweilige Kulisse (K; $K_1$, $K_2$) zwischen den beiden Kurven (53; 54) im Bereich ihrer Geradführung (55) geteilt ist und mindestens ein Kulissenteil (40b bzw. 40a) zwecks Längenveränderung der Geradführung (55) relativ zu dem anderen (40a bzw. 40b) über eine Einstellvorrichtung (56, 57, 58) einstell- und arretierbar ist.

22. Vorrichtung nach einem der Ansprüche 11 bis 21, dadurch gekennzeichnet, daß der entnahmeseitige Öffnungsbereich (E) der die Backformen (12) bildenden maschinenseitigen Backkette (11) zwischen dem Kontaktbereich Druckstempel (28)/Waffelblatt (15) und der Waffelentnahme (bei 36) eine Zusatzlänge (A) bildet.

**Revendications**

1. Procédé de fabrication d'un produit de biscuiterie dans une machine comportant un processus de fabrication qui se déroule en continu, en particulier, pour la fabrication de cornets en gaufrette enroulés, caractérisée par le fait que le produit de biscuiterie est imprimé avec de l'encre immédiatement après la cuisson, à l'état chaud, et par le fait que l'opération d'impression est intégrée dans le processus de fabrication de la machine qui fabrique le produit de biscuiterie.

2. Procédé selon la revendication 1, caractérisé par le fait que le produit de biscuiterie est imprimé alors qu'il se présente sous la forme d'une feuille de gaufrette à partir de laquelle on formera un cornet en gaufrette par enroulement, et alors qu'il est découvert et à plat dans le moule de cuisson garni.

3. Procédé selon la revendication 1, caractérisé par le fait que le produit de biscuiterie, présenté sous la forme d'une feuille de gaufrette à partir de laquelle le cornet en gaufrette sera formé par enroulement, est imprimé sur le trajet de la feuille de gaufrette qui s'étend de la plaque ou du moule de cuisson jusqu'au dispositif d'enroulement des cornets, sur le dispositif transporteur.

4. Procédé selon la revendication 3, caractérisé par le fait qu'un élément de transport, en forme de piston, transporte la feuille de gaufrette du moule de cuisson au dispositif d'enroulement en passant sur un dispositif transporteur et, dans cette action, se pose sur la feuille de gaufrette à transporter et se soulève de cette feuille de gaufrette et assure également le rôle de timbre d'impression.

5. Procédé selon l'une des revendications 1 à 4, caractérisé par le fait que le produit de biscuiterie est imprimé au moyen de timbres d'impression additionnels ou spécialement prévus, et que le timbre d'impression est commandé indépendamment du dispositif transporteur.

6. Procédé selon l'une des revendications 1 à 5, caractérisé par le fait que le timbre d'impression est encré à l'aide d'un tampon encreur ou de rouleaux encreurs.

7. Procédé selon l'une des revendications 1 à 6, caractérisé par le fait que le timbre d'impression, le tampon encreur et les rouleaux sont refroidis, en particulier par un liquide de refroidissement qui circule à l'intérieur du timbre, ainsi qu'à travers les tampons encreurs et/ou les rouleaux encreurs.

8. Procédé selon l'une des revendications 1 à 7, caractérisé par le fait que d'une part plusieurs timbres d'impression impriment l'un après l'autre et qu'ils présentent, d'autre part, des motifs d'impression différents.

9. Procédé selon la revendication 8, caractérisé par le fait que les timbres d'impression sont encrés au moyen d'un unique dispositif d'encrage.

10. Procédé selon l'une des revendications 1 à 9, caractérisé par le fait que le produit de biscuiterie plat, chaud et suffisamment mou pour l'enroulement, est entraîné, après l'impression, mais avant l'enroulement, dans un moule de cuisson ouvert ou sur le dispositif transporteur, pendant un temps suffisamment long pour que l'encre d'impression soit séchée.

11. Dispositif pour la fabrication de cornets en gaufrette, comprenant un dispositif d'enroulement de la feuille de gaufrette et des moules inférieurs et supérieurs qui forment une chaîne de cuisson, pour la mise en oeuvre du procédé selon l'une des revendications 1 à 10, caractérisé par le fait que, en amont d'un dispositif (17) d'enroulement de la feuille de gaufrette, à proximité de la région (E) dans laquelle les gaufriers ou moules de cuisson (12) qui sont constitués essentiellement chacun d'un moule inférieur et d'un moule supérieur (14, 13), au moins un timbre d'impression (28) est monté sur un moyen d'entraînement (25) qui travaille en circuit fermé, et qui présente un premier couloir de circulation (L₁) adjacent aux feuilles de gaufrette (15) qui sont découvertes dans le moule et un deuxième couloir de circulation (L₂) adjacent à un moyen (27) de dépôt d'encre, tel qu'un tampon encreur, un rouleau encreur ou équivalent, cependant qu'à chacune couloir de circulation (L₁, L₂) sont associés des moyens de commande (K; K₁, K₂ qui mettent la surface gravée du timbre en contact avec la feuille de gaufrette (15) ou avec le moyen d'encrage (27) et l'écarte de cette surface ou de ce moyen.

12. Dispositif selon la revendication 11, caractérisé par le fait que le plan du mouvement du moyen d'entraînement (25) guidé en circuit fermé et de la surface gravée du ou des timbres d'impression (28) s'étend sensiblement parallèlement à la partie de moule qui contient la feuille de gaufrette découverte (15), en particulier le moule inférieur (14) et éventuellement parallèlement à un bord de contact (par exemple un rouleau encreur) ou une surface de contact (29) (par exemple un tampon encreur (27)) appartenant à un moyen encreur.

13. Dispositif selon la revendication 11 ou la revendication 12, caractérisé par le fait que le moyen d'entraînement guidé en circuit fermé est formé par une chaîne d'entraînement (25) qui circule dans un plan horizontale parallèlement aux surfaces gravées des moules inférieurs (14) et parallèlement au bord de contact ou à la surface de contact (29) du moyen encreur (27).

14. Dispositif selon l'une des revendications 11 à 13, caractérisé par le fait que les timbres d'impression (28) forment des éléments à peu près en forme de plaque qui peuvent être réglés en position à l'aide de moyens de commande (K; K₁, K₂) et par l'intermédiaire de bras porteurs (26) qui peuvent se déplacer par pivotement (figure 3) ou par translation (figure 2) par rapport aux surfaces gravées du moule de cuisson (14) et par rapport au moyen encreur (27).

15. Dispositif selon l'une des revendications 1 à 14, caractérisé par le fait que les moyens de commande sont formés par des glissières (K: K₁, K₂) qui guident les timbres d'impression (28) ou leurs bras porteurs (26).

16. Dispositif selon l'une des revendications 11 à 15, caractérisé par le fait que le moyen d'entraînement (25) guidé en circuit fermé décrit un ovale à côtés longitudinaux rectilignes (L₁, L₂), cependant qu'à un côté longitudinal du premier couloir est associé au premier couloir de circulation (L₁) et un autre au deuxième couloir de circulation (L₂).

17. Dispositif selon l'une des revendications 11 à 15, caractérisé par le fait que le moyen d'entraînement (33) guidé en circuit fermé décrit une trajectoire circulaire.

18. Dispositif selon l'une des revendications 11 à 17, caractérisé par le fait que le timbre d'impression (28) et/ou le moyen encreur, en particulier le tampon encreur (27), présentent des cavités de refroidissement (37) qui peuvent être parcourues par un agent de refroidissement, par exemple par de l'eau de refroidissement.

19. Dispositif selon l'une des revendications précédentes, notamment selon la revendication 17, caractérisé par le fait qu'il comporte une surface transporteuse plane (30), possédant une forme en plan en partie de cercle, qui s'élève en forme de rampe du point de prélèvement des feuilles de gaufrette (15) dans les moules (en 36) jusqu'au dispositif d'enroulement (17), et un tourniquet transporteur (33) présentant la forme d'un croisillon, disposé au centre de la surface (30) en forme de rampe et de partie de cercle et qui comprend des bras de tourniquet (32) qui suivent le profil de la surface de rampe (30) et sont munis à leur extrémité de pistons entraîneurs (31), ce qui est connu en soi, les pistons entraîneurs (31) formant en même temps des timbres d'impression (28).

20. Dispositif selon l'une des revendications précédentes, caractérisé par le fait que les glissières (K: K₁, K₂) prévues pour la commande des bras porteurs (26) des timbres d'impression forment chacune une surface de glissière rectiligne (guidage rectiligne) (55) comprise entre une rampe descendante (53) et une rampe montante (54), cette surface déterminant la mise du timbre d'impression (28) en contact avec la feuille de gaufrette (15) ou avec le moyen encreur (27).

21. Dispositif selon la revendication 20, caractérisé par le fait que la glissière (K: K₁, K₂) est divisée, dans la région comprise entre les deux rampes (53; 54), dans la région de son guidage rectiligne (55) et qu'au moins une partie de glissière (40b ou 40a) peut être déplacée par rapport à l'autre (40a ou 40b) pour le réglage de la longueur du guidage rectiligne (55), à l'aide d'un dispositif de réglage (56, 57, 58) et peut être bloquée en position.

22. Dispositif selon l'une des revendications 11 à 21, caractérisé par le fait que la région d'ouverture (E) côté prélèvement de la chaîne de cuisson (11) solidaire de la machine, qui forme les moules de cuisson (12), forme une longueur additionnelle (A) entre la région de contact entre le timbre d'impression (28) et la feuille de gaufrette (15) et le prélèvement de la gaufrette (en 35).

## Claims

1. A method for manufacturing pastries in a machine with a continuous production process, more particular for manufacturing wound cornets, characterised in that the pastries are printed with dye in their warm state immediately after baking and the printing process is contained within the manufacturing cycle of the machine producing the pastries.

2. A method according to claim 1, characterised in that the pastry is printed whilst in the wafer form from which a cornet is formed, whilst the said wafer is lying flat and exposed in the filled baking mould.

3. A method according to claim 1, characterised in that the pastry is printed on the conveying device whilst in the wafer form from which the cornet is formed, on the wafer's way from the baking plate or mould to the cornet curling device.

4. A method according to claim 3, characterised in that a stamp-like conveying element moves the wafer from the baking mould along a conveying device to the curling device and in doing so comes to rest on the wafer to be conveyed, is lifted from the said wafer and also acts as a printing stamp.

5. A method according to one of claims 1 to 4, characterised in that the pastry is printed by means of an additional or special printing stamp and the printing stamp is controlled independently of the conveying device.

6. A method according to one of claims 1 to 5, characterised in that the printing stamp is supplied with dye from dye pads or dye rollers.

7. A method according to one of claims 1 to 6, characterised in that the printing stamp, stamp pads or rollers are cooled, more particularly by a cooling fluid, which flows through the inside of the stamp and through stamp pads and/or dye rollers.

8. A method according to one of claims 1 to 7, characterised in that a plurality of printing stamps on the one hand stamp in succession and on the other hand comprise different print designs.

9. A method according to claim 8, characterised in that the printing stamp is supplied with dye by means of a single inking device.

10. A method according to one of claims 1 to 9, characterised in that, after stamping but before curling, the flat, warm and curlable pastry or wafer is carried along in the open baking mould or on the conveying device until the stamp dye has dried.

11. A device for manufacturing cornets with a wafer curling device and lower and upper baking moulds, which form a baking chain, for carrying out the method according to one of claims 1 to 10, characterised in that, upstream of a wafer curling device (17) and adjacent the region (E) in which the baking tongs or baking moulds (12) essentially formed in each case from a lower and upper mould (14, 13) are open for the removal of the wafers, at least one printing stamp (28) is mounted on a rotating drive means (25), which has a first path of movement (L₁) adjacent the wafers (15) lying exposed in the mould and a second path of movement (L₂) adjacent an inking means (27), such as a stamp pad, dye roller or the like, control means (K; K₁, K₂) being associated with each path of movement (L₁, L₂), which control means cause the stamp engraving surface to contact the wafer (15) or inking means (27) and to be lifted therefrom.

12. A device according to claim 11, characterised in that the plane of movement of the rotating drive means (25) and of the respective stamp engraving surface of the printing stamp or stamps (28) extends essentially parallel to the mould part, more particularly to the lower mould (14) containing the exposed wafer (15), and optionally parallel to a bearing edge (e.g. inking roller) or bearing surface (29) (e.g. stamp pad (27)) of an inking means.

13. A device according to claim 11 or claim 12, characterised in that the rotating drive means is formed by a drive chain (25) rotating in a horizontal plane parallel to the engraving surfaces of the lower moulds (14) and parallel to the bearing edge or surface (29) of the inking means (27).

14. A device according to one of claims 11 to 13, characterised in that the printing stamps (28) form approximately plate-like components, which are adjustable by control means (K; K₁, K₂) via supporting arms (26) which are pivotable (Fig. 3) or displaceable parallel (Fig. 2) to the baking mould engraving surfaces (at 14) and the inking means (27).

15. A device according to one of claims 1 to 14, characterised in that the control means are formed by slides (K; K₁, K₂) guiding the printing stamps (28) or the latters' supporting arms (26).

16. A device according to one of claims 11 to 15, characterised in that the rotating drive means (25) describes an oval with straight longitudinal sides (L₁, L₂), one longitudinal side being associated in each case with the first (L₁) and second (L₂) paths of movement respectively.

17. A device according to one of claims 11 to 15, characterised in that the rotating drive means (33) describes a circular path.

18. A device according to one of claims 11 to 17, characterised in that the printing stamps (28) and/or inking means, more particularly stamp pads (27), comprise cooling cavities, through which a cooling medium, such as cooling water, flows.

19. A device according to any one of the preceding claims, in particular according to claim 17, characterised by a flat transportation surface (30) having a basic semi-circular shape, which rises in the manner of a ramp from the mould-side removal point (at 36) for the wafers (15) to the curling device (17), and by a turnstile-like spider conveyor (33), which is arranged centrally relative to the semi-circular ramp surface (30) and comprises spider arms (32) which follow the path of the ramp surface (30) and are provided at the ends with carrier stamps (31), as is known, the carrier stamps (31) being simultaneously designed as printing stamps (28).

20. A device according to any one of the preceding claims, characterised in that slides (K; K₁, K₂) provided for controlling the printing stamp supporting arms (26) each form a straight slide-guide surface (straight guide) (55) between a downwardly inclined (53) and upwardly inclined curve (54), which straight guide effects the contacting of the printing stamp (28) with the wafer (15) or with the inking means (27).

21. A device according to claim 20, characterised in that the respective slide (K; K₁, K₂ is divided between the two curves (53; 54) in the region of its straight guide (55) and at least one slide section (40b or 40a) is adjustable and lockable relative to the other section (40a or 40b) via an adjustment device (56, 57, 58) for the purpose of altering the length of the straight guide (55).

22. A device according to one of claims 11 to 21, characterised in that the opening region (E) on the removal side of the machine-side baking chain (11) forming the baking moulds (12) forms an additional length (A) between the printing stamps (28)/wafer (15) contact region and the wafer removal (at 36).

FIG.1

EP 0 211 225 B1

FIG.2

FIG. 3

FIG. 4